# EUROPEAN PATENT SPECIFICATION

(11) **EP 2 824 539 B1**
(45) Date of publication and mention of the grant of the patent: **04.09.2019**
(21) Application number: 13175807.0
(22) Date of filing: 09.07.2013
(51) Int. Cl.: G06F 3/01, G06F 3/03, G06F 3/0488

(54) **Operating a device using touchless and touchscreen gestures**
Betrieb einer Vorrichtung durch Verwenden berührungsloser Gesten und Berührungsbildschirmgesten
Fonctionnement d'un dispositif à l'aide de gestes sans contact et de gestes d'écran tactile

(43) Date of publication of application: 14.01.2015
(73) Proprietor: BlackBerry Limited, Waterloo, ON N2K 0A7 (CA)
(72) Inventor: Mankowski, Peter, Waterloo, Ontario, N2L 3W8 (CA); Caci, Joseph D., Waterloo, Ontario, N2L 3W8 (CA); Wu, Xiaowei, Waterloo, Ontario, N2L 3W8 (CA)
(74) Representative: Noble, Nicholas

(56) References cited:
- WO-A2-2012/140593
- US-A1- 2010 188 328
- US-A1- 2010 245 289
- US-A1- 2011 310 005
- US-A1- 2012 280 904

## Description

### BACKGROUND

Computation and communication devices, such as laptops, tablets, smartphones, and the like, as well as appliances and other devices include many types of user interfaces. Exemplary user interfaces include touch-screens, touchpads, a stylus, mouse, track pad, and keyboard. Each of these interfaces can have drawbacks in certain environments and for certain users.

US 2010/188328 A1 relates to a data-holding subsystem. The data-holding subsystem includes instructions stored thereon that when executed by a logic subsystem in communication with the data-holding subsystem: receive one or more signals, determine a sensor type for each signal of the one or more signals, identify a sensor type specific pattern corresponding to a motion gesture in at least one of the signals, and generate a gesture message based on the motion gesture. The gesture message may be usable by an operating system of a computing device that includes the data-holding subsystem to provide a system-wide function usable by one or more application programs of the computing device to provide an application specific function. In one embodiment, the data-holding system is an electronic device with a touch screen for detecting touch gestures performed on the touch screen, and a plurality of (e.g. four) not linearly aligned ambient light sensors for detecting touch-less gestures performed above the touch screen. Touch and touch-less gestures may be recognised as a composite gesture.

US 2010/245289 A1 discloses a system for optical proximity sensing and touch input. In one example, the system comprises four optical sensors operable in the wavelength band of ambient light which are mounted in a non-linear arrangement on or below a touch input device. Based on the reflectance of light emitted by visible-light LEDs housed in the touch input device, motion of an object in the proximity of the touch input device can be detected. The motion of the object may be recognised as a touch-less gesture and the touch-less gesture may be combined with touch input information from the touch input device to interpret or verify the touch input of a user. In one example, the touch-less gesture of an object approaching the touch input device may be used to confirm a subsequently detected tap or double tap touch input.

US 2011/310005 A1 discloses a contact-less gesture recognition system that utilises infrared (IR) light emitters and IR proximity sensors for detection and recognition of three-dimensional hand gestures. Sensor data of the IR proximity sensors is divided into frames of a sufficient duration and passed to a gesture classifier to determine whether a gesture signature is present in a respective frame. The gesture classifier initially determines for each frame whether the variance of the proximity sensor data is less than a threshold. If the variance is less than the threshold, no gesture is detected and the frame is discarded. Otherwise, various operations are performed to determine whether the frame data corresponds to a known gesture signature.

### SUMMARY

The present invention is set out in the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 shows a device including an exemplary arrangement of ambient light sensors;
Figure 2 depicts another view of the device shown in Figure 1;
Figure 3 shows a device including an exemplary arrangement of ambient light sensors according to another embodiment;
Figure 4 shows a device including an exemplary arrangement of ambient light sensors according to yet another embodiment;
Figure 5 is a block diagram of a system to process gestures;
Figure 6 is a block diagram of a system to control the two or more ambient light sensors;
Figure 7 shows the process flow of a method of detecting a gesture;
Figure 8 is a block diagram of an exemplary device that facilitates touch-less gesture detection as described herein;
Figure 9 is a block diagram of a system to process hybrid gestures according to an embodiment;
Figure 10 illustrates a touch-less gesture and a touchscreen gesture according to an embodiment;
Figure 11 illustrates a touch-less gesture and a touchscreen gesture according to another embodiment; and
Figure 12 is a process flow of a method of operating a device using touch-less and touchscreen gestures.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

As noted above, conventional user interfaces can have drawbacks in certain environments and for certain users. For example, in certain work environments (e.g., oil rig, operating room), a user's hands may not be clean enough to operate a keyboard or a touchpad. In other environments (e.g., in extreme cold), a user may not wish to remove gloves in order to operate a touchscreen or track pad. Yet, there may be user operations that are most familiar and convenient with the known touchscreen interface. Embodiments of the device and methods described below relate to detection of touch-less gestures as a user interface with the device. Additional embodiments describe a combination of touch-less gestures and touchscreen inputs.

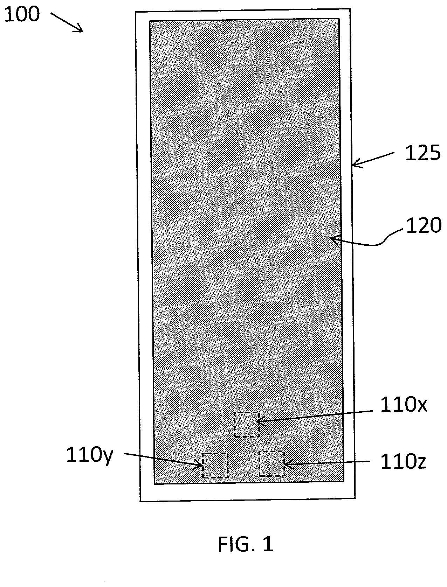

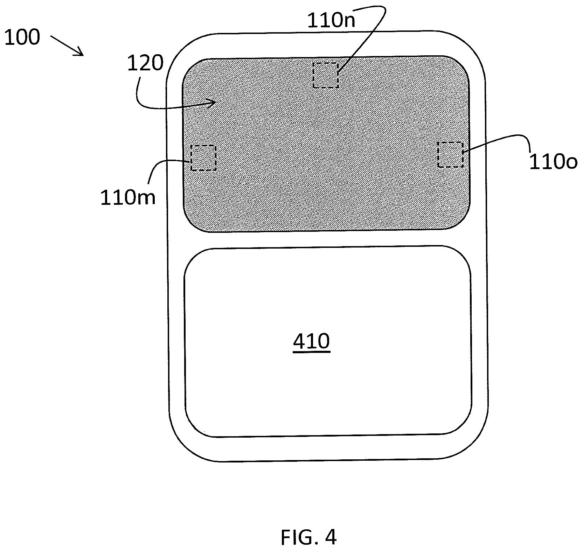

Figure 1 shows a device 100 including an exemplary arrangement of ambient light sensors 110. The device 100 may be any computation, communication, or data storage device such as a tablet, laptop computer, smart phone, music player, storage device, and the like. The view depicted in Figure 1 shows the screen 120 (e.g., glass or other transparent surface) of the device 100 on a surface of the body 125 that displays information to a user, which can be based on user selections or generated by the device 100. Information generated by the device can include the status of communication connections (mobile network, Wi-Fi connection(s), Bluetooth connections, etc.), telephone call, or electronic messages or any combination thereof. The screen 120 can act as the input/output (I/O) between the device 100 and the user. The exemplary device 100 shown in Figure 1 has a screen 120 that occupies most of one surface of the device 100. Other exemplary devices 100 may instead include a keyboard or other components such that the relative size of the screen 120 to the size of a surface of the device 100 is smaller than shown in Figure 1 (see e.g., Figure 4). Three ambient light sensors (ALSs) 110x, 110y, 110z are disposed beneath the screen 120 in Figure 1. Although the ALSs 110 are shown disposed beneath the screen 120 to protect from environmental and accidental damage, the ALSs 110 receive the same intensity of ambient light or at least sufficient ambient light to detect a change in ambient light whether they are disposed above or below the screen 120, because the screen 120 is a transparent device element that allows ambient light to pass through. The screen 120 includes a glass or polymer exterior layer that may filter or diffuse some light, e.g., certain ranges of light wavelengths. Sufficient light for detection as described herein passes through the exterior layer of the screen 120. The ambient light refers to the available light (brightness and direction of light) in the environment in which the device 100 is being used. As such, the ALSs 110 are passive devices. In an example, the ALSs 110 do not have and are not associated with emitters on the device 100 to provide the light that is detected by the ALSs 110. In a further example, the device 100 does not emit light for the purpose of gesture detection. Ambient light is, in an example, the light present in the environment in which the device is present.

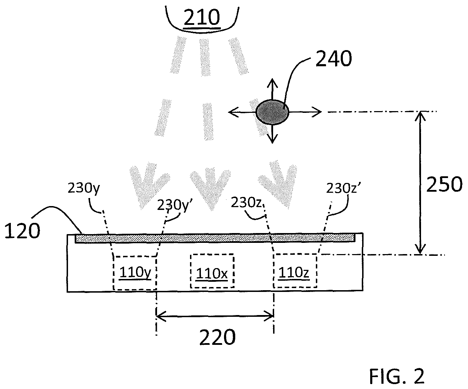

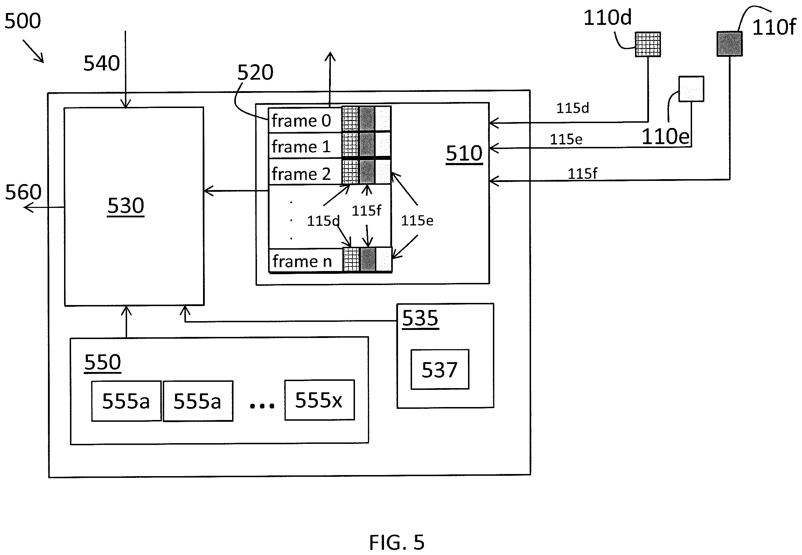

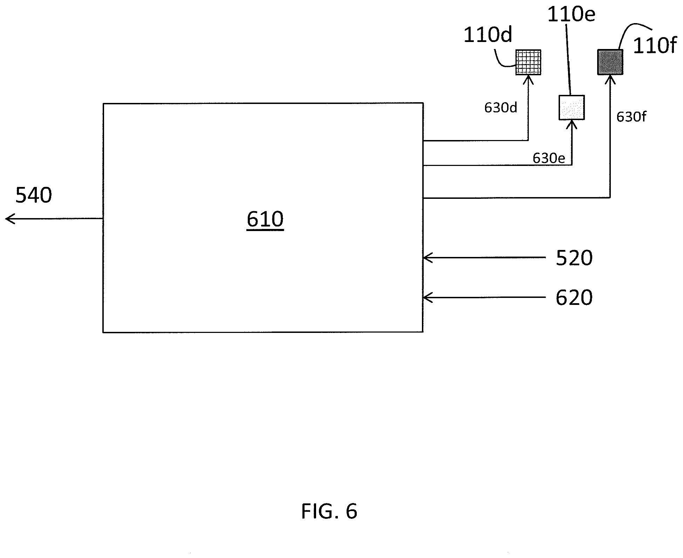

Figure 2 depicts another view of the device 100 shown in Figure 1. The view shown by Figure 2 includes a light source 210. This light source 210 may be the sun, a lamp, or some combination of light sources that provide the available light in a given environment in which the device 100 is being used. If the device 100 is outside during the day, the sun provides the ambient light, which is spread spectrum light. If the device is being used indoors with no exterior windows, the ambient light is generated by indoor lighting systems, e.g., lamps, fluorescent bulbs, incandescent bulbs, LEDs, etc. The ambient light can also be a combination of natural light (e.g., sunlight) and artificial light (e.g., fluorescent light, incandescent light). Each ALS 110 outputs a current level corresponding with the measured light intensity 115 (see e.g., Figure 5). An analog-to-digital converter may be used to derive a digital output from the ALSs 110. Each of the ALSs 110 may have adjustable sensitivity (adjustable gain setting). Each ALS 110 may also be a spread spectrum sensor with a selectable range of operation among two or more ranges (wavelength bands or ranges). The process entailed in this selection is discussed further below with reference to Figure 6. The full range of operation of each ALS 110 may be close to the wavelength range of visible light (400nm to 700 nm). A typical commercially available ALS may detect ambient light in the wavelength range of 350nm to 700 nm, for example. Because each ALS 110 measures the intensity of the available (ambient) light within its zone of reception (see, e.g., 230y and 230y' defining a zone of reception for ALS 110y and 230z and 230z' defining a zone of reception for ALS 110z), the ALS 110 is a passive sensor that does not require a corresponding emitter or transmitter. The zone of reception is typically cone-shaped with the cone dimensions being determined by an angle of half sensitivity. Figure 2 is a cross-sectional view of an exemplary zone of reception. Each ALS 110 may measure light intensity 115 within its zone of reception in a photometric unit (lux) to provide a measure of lumens per square-meters or in a radiometric unit (irradiance) to provide a measure of watts per square-meters. In the embodiment shown in Figures 1 and 2, the three ALSs 110x, 110y, 110z are arranged in a triangular pattern. That is, at least one ALS 110 is offset or not linearly aligned with at least two other ALSs 110.

Through the inclusion of two or more ALSs 110 (e.g., three ALSs 110x, 110y, 110z), the device 100 shown in Figures 1 and 2 facilitates detection of a gesture by an object 240 that changes the light intensity 115 (see e.g., Figure 5) in the zone of detection of one or more of the ALSs 110 due to movement of the object 240. Through the inclusion of three or more ALSs 110 with at least three of the three or more ALSs 110 in a triangular pattern (see, e.g., Figure 1), movement of an object 240 may be discerned in three dimensions. As is further detailed below, a gesture is detected and identified based on the changes in light intensity 115 measured by each of the ALSs 110 at different time instants or measurement cycles due to the movement of the object 240. That is, each of the ALSs 110 measures light intensity 115 simultaneously with the other ALSs 110 at a given time instant or in sequence with the other ALSs 110 for a measurement cycle, and the comparison of light intensity 115 measurements for different time instants or measurement cycles is used to detect a gesture. For example, assuming that the ALSs 110 measure light intensity 115 simultaneously (or near-simultaneously), at the time instant illustrated by Figure 2, the object 240 is positioned such that the light intensity 115 detected by ALS 110z is affected but the light intensity 115 detected by ALSs 110x and 110y is unaffected by the object 240. Based on a direction of movement of the object 240, the light intensity 115 detected by different ones of the ALSs 110x, 110y, 110z may be affected at different times instants by the position of the object 240. The object 240 may be a hand, one or more fingers, a wand or another non-transparent item that partially or completely blocks the passage of ambient light so that its position may be detected based on the effect on measured light intensity 115.

A touch-free gesture may mimic a swipe, also known as a flick, which can be a particular type of touch on a touch-sensitive display. The swipe or flick may begin at an origin point and continue to an end point, for example, a concluding end of the gesture. A gesture may be identified by attributes or characteristics of the gesture as discussed further below. These attributes may include the origin point (of detection by an ALS 110), the end point, the distance travelled by the object 240, the duration, the velocity, and the direction, for example. A gesture may be long or short in distance and/or duration. Two points of the gesture may be utilized to determine a direction of the gesture. A gesture may also include a hover. A hover may be non-movement of the object 240 at a location that is generally unchanged over a period of time.

In the arrangement of ALSs 110 shown in Figures 1 and 2, a minimum distance may be required among the ALSs 110x, 110y, and 110z (e.g., distance 220 between ALSs 110y and 110z) in order to distinguish the movement of the object 240. This minimum distance may generally be on the order of 2 centimeters (cm). More specifically, the minimum distance between ALSs 110 is based on an expected size of the object 240 as one factor. For example, when an open hand is used as the object 240, a greater minimum distance may be required to distinguish a gesture than when one finger is used as the object 240. This is because the open hand would cover all three ALSs 110x, 110y, 110z at more time instants such that a movement of the open hand could only be distinguished when the object 240 is at an edge of the set of ALSs 110x, 110y, 110z. According to one or more embodiments, the ALSs 110 may be positioned at the corners or along the edges of the screen 120 and, thus, the screen 120 size may determine the distance between the ALSs 110. When an open hand is anticipated to be the object 240 used to perform a gesture, a minimum distance between ALSs 110 of 3.5 cm may be used. The increased distance between ALSs 110 facilitates distinguishing the gesture (e.g., direction, speed) more clearly, because all ALSs 110 will not be covered by the open hand object 240 for the majority of the gesture movement.

Another distance that must be considered is the distance between the object 240 and the ALS 110 (e.g., distance 250 between the object 240 and ALS 110z). First, as Figure 2 makes clear, the object 240 must be between the light source 210 and the ALSs 110 in order to be detected by one or more of the ALSs 110 based on the effect of the object 240 on light intensity 115 detected by one or more of the ALSs 110. While a minimum distance is generally not required between the object 240 and an ALS 110 (i.e. the object 240 may almost touch the screen 120 surface), the object 240 may generally be 2 - 3 cm away from the screen 120 while performing the gesture. When the object 240 is too close to the ALSs 110 (screen 120 surface), then some portion of the beginning or end of a gesture may not be detected. This is due to the fact that the width of the zone of reception of the ALSs 110 (as shown in the cross-sectional depiction of Figure 2 by 230y and 230y' and by 230z and 230z', for example) is narrowest at the surface of the ALSs 110 and increases with increased distance from the ALSs. Thus, as is clear from Figure 2, an object 240 that is closer in distance to an ALS 110 (screen 120 surface) must also be closer to a center of the ALS 110 (in the perpendicular dimension, along the screen 120) in order to enter the zone of reception of the ALS 110. By hovering the object 240 above a given ALS 110 and moving it farther away (reducing the object 240 effect and increasing light intensity 115 measurement) or closer together (increasing the object 240 effect and decreasing light intensity 115 measurement), a gesture analogous to a mouse click may be made. Thus, double-click and triple-click gestures may be added to available distinguishable gestures.

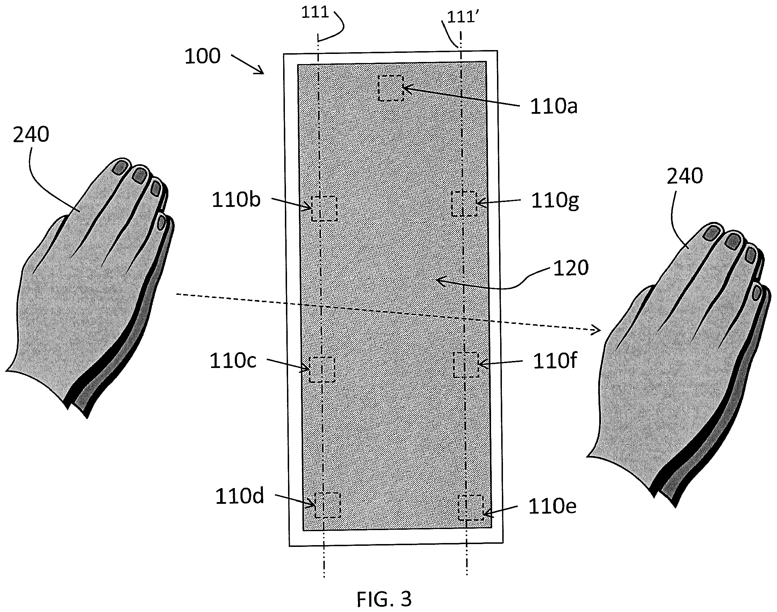

Figure 3 shows a device 100 including an exemplary arrangement of ambient light sensors 110 according to another embodiment. The exemplary device 100 shown in Figure 3 is similar to the device 100 shown in Figures 1 and 2 in that the screen 120 occupies most of one surface of the device 100. The device 100 shown in Figure 3 includes seven ALSs 110a, 110b, 110c, 110d, 110e, 110f, 110g arranged around the perimeter of the screen 120. As shown in Figure 3, ALS 110a is offset from a common axial line 111 of ALSs 110b, 110c, and 110d and also a common axial line 111' of ALSs 110e, 110f, and 110g. In alternate embodiments, one or more of the ALSs 110b, 110c, and 110d or the ALSs 110e, 110f, and 110g may be disposed such that they are not linearly aligned with other ALSs 110 along 111 or 111', respectively. For example, both ALS 110c and ALS 110f may be disposed closer to the center of the screen 120 and, thus, offset from the axial line 111 common to ALSs 110b and 110d and the axial line 111' common to ALSs 110e and 110g, respectively. Increasing the number of ALSs 110 increases the number of gestures that may be detected by the device 100. For example, one waving gesture (movement of the object 240 from one side of the device 100 to the other) is illustrated by Figure 3. Because of the number of ALSs 110 around the perimeter of the screen 120, other waving gestures, distinguishable from the waving gesture shown in Figure 3, are also possible. The object 240 may move from ALSs 110d and 110e to ALS 110a, for example, or from ALS 110d to ALS 110g. It bears noting that, if the ALSs 110 were clustered closer together and the object 240 is a hand, as shown in Figure 3, fewer distinguishable gestures are possible than when the ALSs 110 are disposed, as shown.

Figure 4 shows a device 100 including an exemplary arrangement of ambient light sensors 110 according to yet another embodiment. Unlike the exemplary devices 100 shown in Figures 1-3, the device 100 shown in Figure 4 includes a keyboard or other component in the space 410 such that the screen 120 occupies less of one surface of the device 100 relative to the screen 120 shown in Figures 1-3. Three ALSs 110m, 110n, 110o are shown near the perimeter of the screen 120. As noted above and shown in Figure 1, the ALSs 110m, 110n, 110o may be disposed closer together so that the gestures made by the object 240 are more analogous to gestures a user of a touchpad may make with a finger.

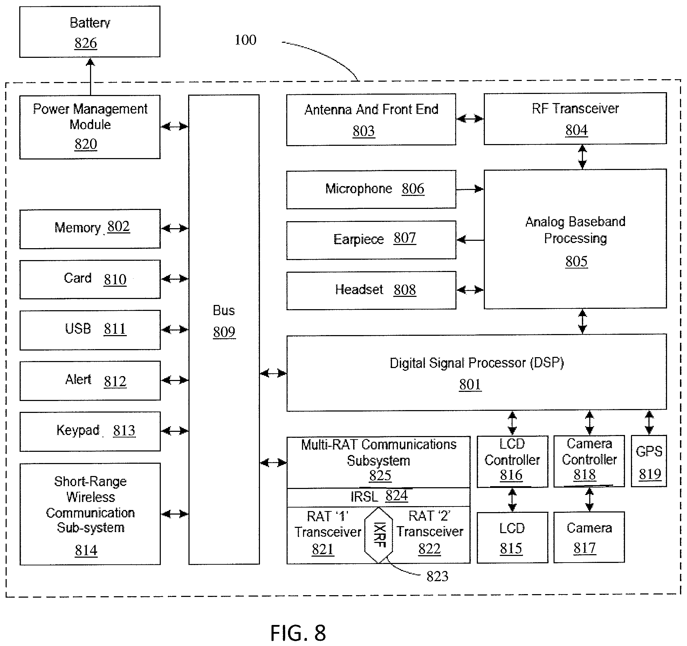

Figure 5 is a block diagram of a system 500 to process gestures. Functions performed by the system 500 are discussed below with reference to specific components. However, in alternate embodiments, the system 500 may process gestures using one or more processors and one or more memory devices that serve more than one of the functions discussed herein. In addition, the same processors and memory devices that process gestures as discussed below may perform other functions within the device 100. For example, the processor to identify gestures may be one of several digital signal processors (DSPs 801, Figure 8) generally available in a smart phone or tablet.

An input to the system 500 is the light intensity 115 measured from each of the ALSs 110. The measurements are received by a data collection engine 510, which includes both memory and processor functionalities. As the light intensity 115 measurement data is received from each of the ALSs 110, the data collection engine 510 outputs a frame of data 520 for each time instant. That is, each frame of data 520 includes the light intensity 115 measurement for every ALS 110 at a given time instant. While each frame of data 520 may generally be discussed as including the light intensity 115 measurement for each ALS 110 at an instant of time, the ALSs 110 may instead sample light intensity 115 in turn (rather than simultaneously) such that a frame of data 520 includes light intensity 115 measurements for a period of time for one cycle of the ALSs 110. A processor functioning as a gesture identifier 530 receives each frame of data 520. The gesture identifier 530 may operate according to one of several embodiments as discussed below.

In order to identify a movement of the object 240 as a particular (known) gesture, the gesture identifier 530 uses a comparison of light intensity 115 measurements of the ALSs 110, as discussed below, along with a comparison with a gesture template 537 stored in a template memory device 535. A dynamically adjusted minimum change in light intensity 115 may be set based on expected noise and errors. That is, a threshold percentage of change in detected light intensity 115 may be required before it is interpreted as a true variation in ambient light. Based on the light intensity 115 measurements among the ALSs 110 within a frame of data 520 (for a single time instant or measurement cycle), the gesture identifier 530 may ascertain a position of the object 240. For example, for a given frame of data 520, if the light intensity 115 measurements of ALSs 110d and 110f are higher (by a defined threshold) than the light intensity 115 measurement output by ALS 110e, then the object 240 may be determined to be over the ALS 110e and, thereby, blocking some of the light from the light source 210. Based on the light intensity 115 measurements among two or more frames of data 520 (two or more time instants or measurement cycles), the gesture identifier 530 may ascertain characteristics of the (movement) gesture such as a direction of the movement, speed of the movement, and whether the movement is accelerating or decelerating. For example, if the light intensity 115 measurements of ALSs 110d and 110f are higher (by a defined threshold) than the light intensity 115 measurement output by ALS 110e in one frame of data 520 and the light intensity 115 measurement of ALS 110e is higher (by a defined threshold) than the light intensity 115 measurements output by ALSs 110d and 110f in the next frame of data 520, the gesture identifier 530 may ascertain that the object 240 moved from a direction of the ALS 110e toward a direction of the ALSs 110d and 110f. If the change in light intensity 115 measurements occurred over several frames of data 520, then the movement of the object 240 may be ascertained as being relatively slower than if the change occurred over the course of one frame of data 240. Based on the ascertained characteristics of the gesture, the gesture identifier 530 may identify the gesture among a set of known gestures based on the gesture template 537.

The gesture template 537 facilitates the association of a movement of the object 240 discerned by the gesture identifier 530 with a particular known gesture. The gesture template 537 may be regarded as a sample of ideal light intensity 115 measurement data corresponding with each known gesture. More specifically, the gesture template 537 may be regarded as providing the ideal relative light intensity 115 among the ALSs 110 or frames of data 520 or both for a given known gesture. Thus, by comparing the input light intensity 115 measurements (in the frames of data 520) or comparisons of light intensity measurements 115 with the ideal measurements in the gesture template 537, the gesture identifier 530 identifies the object 240 movement as a known gesture. This identification of the gesture may be done by a process of elimination of the known gestures in the gesture template 537. Thus, the gesture identifier 530 may identify the gesture using the gesture template 537, through a process of elimination of available known gestures, before the object 240 movement is complete. In this case, the gesture identifier 530 may continue to process frames of data 520 to verify the detected gesture or, in alternate embodiments, the gesture identifier 530 may stop processing additional frames of data 520 after identifying the gesture and wait for a trigger signal 540 discussed below. Each of the ALSs 110 may be programmable to provide 10, 20, 50, 10, 125, 15, 200 and 250 samples of light intensity 115 (frames of data 520) a second. The ALS 110 scanning rate is a factor in determining the speed at which a gesture may be made in order to be recognized. That is, when the ALSs 110 are sampling at a rate of 10 light intensity 115 samples per second, the fastest identifiable gesture is much slower than the fastest identifiable gesture that may be made when the ALSs 110 are sampling at a rate of 250 light intensity 115 samples per second. The ALSs 115 sampling at a rate of 10 frames of data 520 per second (10 light intensity 115 samples per second each) may translate to an object 240 travelling 10 cm in 1.5 seconds in order to be recognized and processed properly. The system 610 (Figure 6) may dynamically calculate and adjust the scanning rate of the ALSs 110.

Another input to the gesture identifier 530 is one of the gesture libraries 555 stored in a gesture library storage 550. Each gesture library 555 is associated with an application, and the gesture identifier 530 selects the gesture library 555 associated with the application currently being executed by the device 100. A given gesture library 555 associated with a given application may not include every known gesture in the gesture template 537. Thus, based on the application currently being executed by the device 100, the gesture identifier 530 may narrow down the set of known gestures within the gesture template 537 to compare against the frames of data 520 output by the data collection engine 510 in order to identify the gesture. A gesture library 555 indicates an action output 560 corresponding with a set of gestures. Thus, when the gesture identifier 530 identifies a known gesture based on the movement of the object 240 and the gesture template 537, and the gesture identifier 530 finds that known gesture among the set of gestures in a gesture library 555 associated with the application currently being run by the device 100, then the gesture identifier 530 outputs the corresponding action output 560 stemming from the object 240 movement. The action output 560 of the gesture identifier 530 acts as a command to the application being executed. For example, when the application being executed is a document editing session, the gestures identified by the gesture identifier 530 may correspond with action outputs 560 such as "next page" (wave down), "previous page" (wave up), "zoom in" (bringing fingers together), and "zoom out" (spreading fingers apart). If the device 100 is currently not executing any application or if the application currently being executed by the device 100 does not have a gesture library 555 associated with it, then, even if the gesture identifier 530 uses the gesture template 537 to identify a known gesture based on the movement of the object 240, no action is taken by the gesture identifier 530 based on identifying the gesture. That is, there is no action output 560 corresponding with the identified gesture, because there is no gesture library 555 to look up.

According to one embodiment, the gesture identifier 530 may not use the gesture template 537 to identify a gesture when no application is being executed by the device 100 or when an application without an associated gesture library 555 is being executed by the device 100. According to the present invention, embodiment, the gesture identifier 530 may not begin to process any frames of data 520 before receiving a trigger signal 540. The trigger signal 540 is detailed below with reference to Figure 6. According to another embodiment not forming part of the present invention, the gesture identifier 530 may process an initial set of frames of data 520 and then not process another set of frames of data 520 needed to identify the gesture until the trigger signal 540 is received. For example, the gesture identifier 530 may process a particular number of frames of data 520 or a number of frames of data 520 representing a particular length of time (number of time instants) and then stop processing further frames of data 520 until the trigger signal 540 is received. According to yet another embodiment not forming part of the present invention, the gesture identifier 530 may continually process frames of data 520 as they are output from the data collection engine 510.

Regardless of the behavior of the gesture identifier 530 based on the trigger signal 540, the lack of an associated gesture library 555, or the lack of an application being executed at all, the data collection engine 510 still outputs the frames of data 520. This is because the light intensity 115 measurements may be used for background functions such as adjustment of the screen 120 backlighting, for example, based on the detected ambient light, even if gesture detection is not to be performed. Some of these background functions are detailed below with reference to Figure 6.

Figure 6 is a block diagram of a system 610 to control the two or more ambient light sensors 110. As noted with reference to Figure 5, the functions described for the system 610 may be performed by one or more processors and one or more memory devices, which may also perform other functions within the device 100. The system 610 may be regarded as a background processing system, because it may operate continuously to dynamically control the ALSs 110. The system 610 receives the light intensity 115 measurements output by the ALSs 110 to the data collection engine 510 as frames of data 520. In alternate embodiments, the ALSs 110 may directly output light intensity 115 measurements to the system 610 as well as to the data collection engine 510. The system 610 may also receive additional information 620. This additional information 620 may indicate, for example, whether the device 100 is currently executing an application and, if so, which application the device 100 is currently executing.

Based on the light intensity 115 measurements (directly or in the form of frames of data 520) and the additional information 620, the system 610 adjusts the sensitivity or wavelength band or range or both for each ALS 110. For example, based on the available light (measured ambient light intensity 115), the system 610 may change the wavelength range for the ALSs 110 via a control signal 630 from the system 610 to one or more of the ALSs 110. The change (adjustment of wavelength range) may ensure that the ALSs 110 are focused in the correct wavelength (frequency) band for the current conditions. As another example, based on a change in available light (e.g., based on switching a light on or off), the system 610 may change the sensitivity of the ALSs 110. Any order of switching lights produces a new range of change in light intensity 115 to which the ALSs 110 must adapt. For example, the range of change of light intensity 115 to which the ALSs 110 are sensitive may be 50 - 250 lux. In a darker environment (e.g., a conference room during a presentation) the range of change of light intensity 115 to which the ALSs 110 are sensitive may be 2 - 15 lux. The adjustment of the ALSs 110 through the control signal 630 may be done continuously, periodically, or based on a trigger event such as, for example, a change in the application being executed by the device 100. For example, sensitivity adjustment may be done automatically once for every 5 frames of data 520. The system 610 may also adjust the order and frequency of light intensity 115 measurements by the ALSs 110. For example, based on additional information 620 indicating that a particular application is being executed by the device 100, the system 610 may send control signals 630 to have the ALSs 110 collect light intensity 115 samples for each cycle (frame of data 520) in a particular order and with a particular frequency.

In addition to controlling the ALSs 110, the system 610 may provide the trigger signal 540 to the gesture identifier 530 (see Figure 5). Because the system 610 monitors the light intensity 115 measurements in the frames of data 520 to fulfill the background functions described above, the system 610 may additionally identify trigger events that signal when gesture processing should be initiated by the gesture identifier 530 and output the trigger signal 540 accordingly. For example, the system 610 may output a trigger signal 540 to the gesture identifier 530 when it receives a frame of data 520 that indicates a change in light intensity 115 measured by one or more ALSs 110. The change in light intensity 115 measurement may indicate a start of a movement of an object 240 and, thus, the start of a gesture. In various embodiments, the change in measured light intensity 115 may be 10% +/- 3% or higher before the system 610 outputs a trigger signal 540. In an embodiment, the change in measured light intensity 115 may be 20% +/- 5% or higher before the system 610 outputs a trigger signal 540. In an embodiment, the change in measured light intensity may be 25% +/- 5% or higher before the system 610 outputs a trigger signal 540.

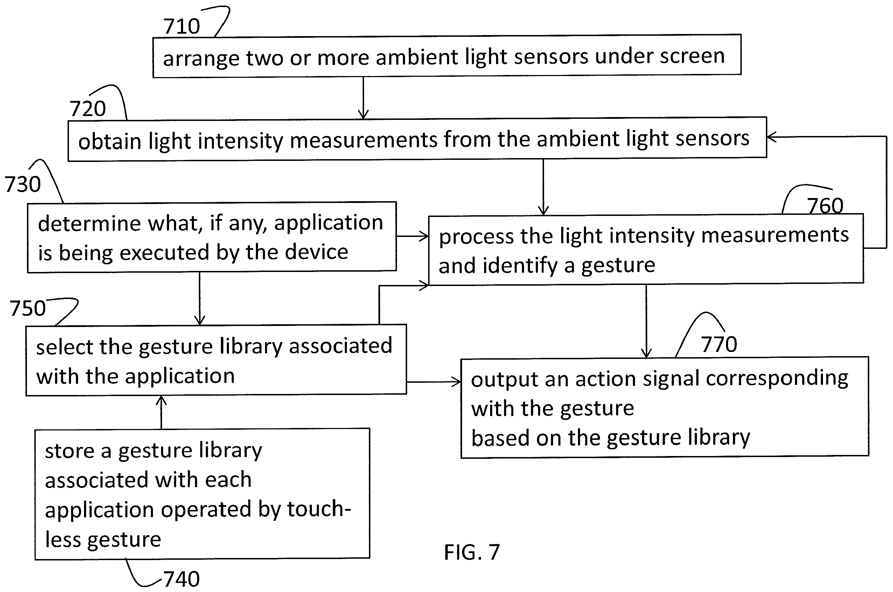

Figure 7 shows the process flow of a method 700 of detecting a gesture according to embodiments discussed above. At block 710, arranging two or more ALSs 110 under the screen 120 of a device 100 may be according to the embodiments shown in Figure 1, 3, and 4 or in alternate arrangements according to the guidelines discussed above. Obtaining light intensity 115 measurements from the ALSs 110 (block 720) may be in photometric or radiometric units as discussed above. Obtaining (receiving) the light intensity 115 measurements may also include dynamically controlling the ALSs 110 with the system 610 to modify the wavelength range or spectral sensitivity of each ALS 110, for example. As discussed with reference to Figure 6, the control by the system 610 may be based on light intensity 115 measurements by the ALSs 110, for example. Determining what, if any, application is being executed by the device 100, at block 730, may be done by the gesture identifier 530 and may be part of the additional information 620 provided to the system 610. At block 740, the process includes storing a gesture library 555 associated with each application that may be operated using touch-less gestures in the gesture library storage 550. Selecting the gesture library 555 associated with the application being executed by the device 100 may be done by the gesture identifier 530 at block 750. Block 750 may also include the gesture identifier 530 determining that no gesture library 555 is applicable because the device 100 is not executing any application or is executing an application without an associated gesture library 555. At block 760, processing the light intensity 115 measurements and identifying a gesture involves the data collection engine 510 outputting the frames of data 520 and the gesture identifier 530 using a comparison of light intensity 115 measurements in addition to the gesture template 537. Block 760 may also include the system 610 sending a trigger signal 540 to the gesture identifier 530 to begin or continue the gesture processing. Block 760 may further include the gesture identifier 530 not identifying the gesture at all based on not having a gesture library 555 available. At block 770, outputting an action signal 560 corresponding with the gesture based on the gesture library 555 is done by the gesture identifier 530 as detailed above.

Figure 8 is a block diagram of an exemplary device 100 that facilitates touch-less gesture detection as described in embodiments above. While various components of the device 100 are depicted, alternate embodiments of the device 100 may include a subset of the components shown or include additional components not shown in Figure 8. The device 100 includes a DSP 801 and a memory 802. The DSP 801 and memory 802 may provide, in part or in whole, the functionality of the system 500 (Figure 5). As shown, the device 100 may further include an antenna and front-end unit 803, a radio frequency (RF) transceiver 804, an analog baseband processing unit 805, a microphone 806, an earpiece speaker 807, a headset port 808, a bus 809, such as a system bus or an input/output (I/O) interface bus, a removable memory card 810, a universal serial bus (USB) port 811, an alert 812, a keypad 813, a short range wireless communication sub-system 814, a liquid crystal display (LCD) 815, which may include a touch sensitive surface, an LCD controller 816, a charge-coupled device (CCD) camera 817, a camera controller 818, and a global positioning system (GPS) sensor 819, and a power management module 820 operably coupled to a power storage unit, such as a battery 826. In various embodiments, the device 100 may include another kind of display that does not provide a touch sensitive screen. In one embodiment, the DSP 801 communicates directly with the memory 802 without passing through the input/output interface ("Bus") 809.

In various embodiments, the DSP 801 or some other form of controller or central processing unit (CPU) operates to control the various components of the device 100 in accordance with embedded software or firmware stored in memory 802 or stored in memory contained within the DSP 801 itself. In addition to the embedded software or firmware, the DSP 801 may execute other applications stored in the memory 802 or made available via information media such as portable data storage media like the removable memory card 810 or via wired or wireless network communications. The application software may comprise a compiled set of machine-readable instructions that configure the DSP 801 to provide the desired functionality, or the application software may be high-level software instructions to be processed by an interpreter or compiler to indirectly configure the DSP 801.

The antenna and front-end unit 803 may be provided to convert between wireless signals and electrical signals, enabling the device 100 to send and receive information from a cellular network or some other available wireless communications network or from a peer device 100. In an embodiment, the antenna and front-end unit 803 may include multiple antennas to support beam forming and/or multiple input multiple output (MIMO) operations. As is known to those skilled in the art, MIMO operations may provide spatial diversity, which can be used to overcome difficult channel conditions or to increase channel throughput. Likewise, the antenna and front-end unit 803 may include antenna tuning or impedance matching components, RF power amplifiers, or low noise amplifiers.

In various embodiments, the RF transceiver 804 facilitates frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 805 or the DSP 801 or other central processing unit. In some embodiments, the RF Transceiver 804, portions of the antenna and front-end unit 803, and the analog base band processing unit 805 may be combined in one or more processing units and/or application specific integrated circuits (ASICs).

Note that, in this diagram, the radio access technology (RAT) RAT1 and RAT2 transceivers 821, 822, the IXRF 823, the IRSL 824 and Multi-RAT subsystem 825 are operably coupled to the RF transceiver 804 and analog baseband processing unit 805 and then also coupled to the antenna and front-end unit 803 via the RF transceiver 804. As there may be multiple RAT transceivers, there will typically be multiple antennas or front ends 803 or RF transceivers 804, one for each RAT or band of operation.

The analog baseband processing unit 805 may provide various analog processing of inputs and outputs for the RF transceivers 804 and the speech interfaces (806, 807, 808). For example, the analog baseband processing unit 805 receives inputs from the microphone 806 and the headset 808 and provides outputs to the earpiece 807 and the headset 808. To that end, the analog baseband processing unit 805 may have ports for connecting to the built-in microphone 806 and the earpiece speaker 807 that enable the device 100 to be used as a cell phone. The analog baseband processing unit 805 may further include a port for connecting to a headset or other hands-free microphone and speaker configuration. The analog baseband processing unit 805 may provide digital-to-analog conversion in one signal direction and analog-to-digital conversion in the opposing signal direction. In various embodiments, at least some of the functionality of the analog baseband processing unit 805 may be provided by digital processing components, for example by the DSP 801 or by other central processing units.

The DSP 801 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 801 may perform modulation, coding, interleaving, and spreading, and for a receiver function the DSP 801 may perform despreading, deinterleaving, decoding, and demodulation. In another embodiment, for example in an orthogonal frequency division multiplex access (OFDMA) technology application, for the transmitter function the DSP 801 may perform modulation, coding, interleaving, inverse fast Fourier transforming, and cyclic prefix appending, and for a receiver function the DSP 801 may perform cyclic prefix removal, fast Fourier transforming, deinterleaving, decoding, and demodulation. In other wireless technology applications, yet other signal processing functions and combinations of signal processing functions may be performed by the DSP 801.

The DSP 801 may communicate with a wireless network via the analog baseband processing unit 805. In some embodiments, the communication may provide Internet connectivity, enabling a user to gain access to content on the Internet and to send and receive e-mail or text messages. The input/output interface ("Bus") 809 interconnects the DSP 801 and various memories and interfaces. The memory 802 and the removable memory card 810 may provide software and data to configure the operation of the DSP 801. Among the interfaces may be the USB interface 811 and the short range wireless communication sub-system 814. The USB interface 811 may be used to charge the device 100 and may also enable the device 100 to function as a peripheral device to exchange information with a personal computer or other computer system. The short range wireless communication sub-system 814 may include an infrared port, a Bluetooth interface, an IEEE 802.11 compliant wireless interface, or any other short range wireless communication sub-system, which may enable the device to communicate wirelessly with other nearby client nodes and access nodes. The short-range wireless communication sub-system 814 may also include suitable RF Transceiver, Antenna and Front End subsystems.

The input/output interface ("Bus") 809 may further connect the DSP 801 to the alert 812 that, when triggered, causes the device 100 to provide a notice to the user, for example, by ringing, playing a melody, or vibrating. The alert 812 may serve as a mechanism for alerting the user to any of various events such as an incoming call, a new text message, and an appointment reminder by silently vibrating, or by playing a specific pre-assigned melody for a particular caller.

The keypad 813 couples to the DSP 801 via the I/O interface ("Bus") 809 to provide one mechanism for the user to make selections, enter information, and otherwise provide input to the device 100. The keypad 813 may be a full or reduced alphanumeric keyboard such as QWERTY, DVORAK, AZERTY and sequential types, or a traditional numeric keypad with alphabet letters associated with a telephone keypad. The input keys may likewise include a track wheel, track pad, an exit or escape key, a trackball, and other navigational or functional keys, which may be inwardly depressed to provide further input function. Another input mechanism may be the LCD 815, which may include touch screen capability and also display text and/or graphics to the user. The LCD controller 816 couples the DSP 801 to the LCD 815.

The CCD camera 817, if equipped, enables the device 100 to make digital pictures. The DSP 801 communicates with the CCD camera 817 via the camera controller 818. In another embodiment, a camera operating according to a technology other than Charge Coupled Device cameras may be employed. The GPS sensor 819 is coupled to the DSP 801 to decode global positioning system signals or other navigational signals, thereby enabling the device 100 to determine its position. The GPS sensor 819 may be coupled to an antenna and front end (not shown) suitable for its band of operation. Various other peripherals may also be included to provide additional functions, such as radio and television reception.

In various embodiments, device 100 comprises a first Radio Access Technology (RAT) transceiver 821 and a second RAT transceiver 822. As shown in Figure 16, and described in greater detail herein, the RAT transceivers '1' 821 and '2' 822 are in turn coupled to a multi-RAT communications subsystem 825 by an Inter-RAT Supervisory Layer Module 824. In turn, the multi- RAT communications subsystem 825 is operably coupled to the Bus 809. Optionally, the respective radio protocol layers of the first Radio Access Technology (RAT) transceiver 821 and the second RAT transceiver 822 are operably coupled to one another through an Inter-RAT exchange Function (IRXF) Module 823.

As detailed above, touch-less gestures may be translated to an action output 560 by the gesture identifier 530. The action output 560 may control various aspects of an application being executed by the device 100, for example. As described below, touch-less gestures may be used in combination with touchscreen inputs or gestures in one of several ways. Touchscreen technology itself is not detailed herein but instead is assumed to encompass all known touchscreen user input systems.

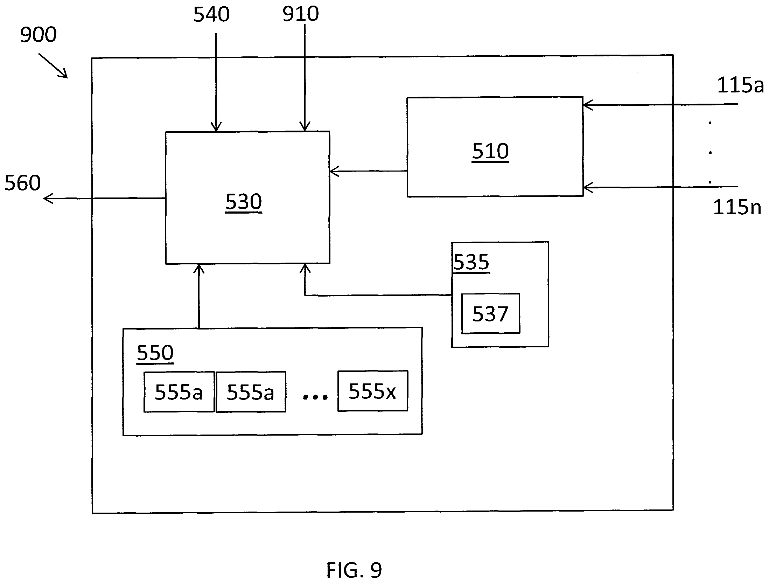

Figure 9 is a block diagram of a system 900 to process hybrid gestures according to an embodiment. The system 900 may be regarded as an alternative embodiment of the system 500 shown in Figure 5. As noted with reference to the system 500 of Figure 5, any one or more processors in combination with one or more of the memory devices of the device 100 may serve the functions discussed with reference to the system 900 even though a particular embodiment is depicted and discussed as an example herein. As shown by Figure 9, the inputs to the gesture identifier 530 include a touchscreen gesture 910 output by a known touchscreen system of the device 100. According to one embodiment, a touch-less gesture (identified based on the gesture template 537) followed by a touchscreen gesture 910 may be treated as one hybrid gesture by the gesture identifier 530 for purposes of matching the gesture with an action output 560. According to another embodiment, a touchscreen gesture 910 followed by a touch-less gesture may be treated as the hybrid gesture. That is, the gesture library 555 may match a combination of a touch-less gesture and a touchscreen gesture 910 to an action output 560. In other embodiments, each gesture (touch-less or touchscreen 910) may be treated as an independent gesture by the gesture identifier 530 and may correspond with an independent action output 560 in the gesture library 555. In still other embodiments, a hybrid gesture may be used by the gesture identifier 530 to look up a corresponding action output 560 when a touchscreen gesture 910 is received. When a touchscreen gesture 910 is not received and a touch-less gesture is identified, the gesture identifier 530 may use the touch-less gesture alone to find a corresponding action output 560. This is because not every touchscreen input may be input to the system 900 as a touchscreen gesture 910. For example, tapping twice on a touchscreen (screen 120 of the device 100) which is displaying an application generates a signal within the device 100 to execute that application. This functionality may be retained (not every touchscreen input is treated as a touchscreen gesture 910 to be input to the system 900) while additionally facilitating control of the application or other control through touch-less gestures, touchscreen gestures, or a combination of the two through the system 900.

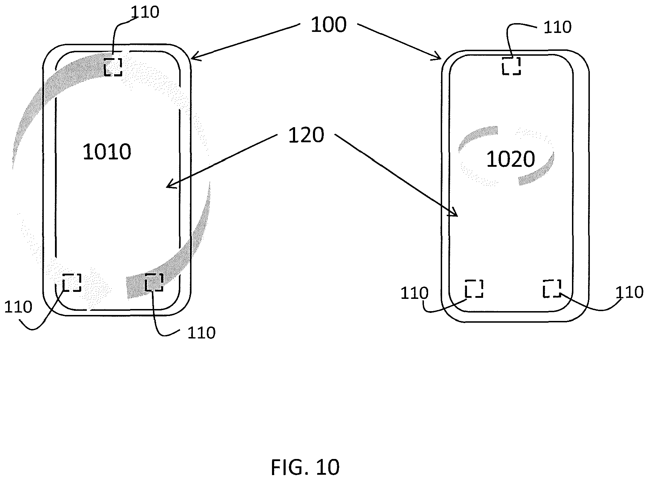

Figure 10 illustrates a touch-less gesture and a touchscreen gesture 910 according to an embodiment. The motion 1010, performed above the device 100, is detected by the ALSs 110 and identified as a touch-less gesture by the gesture identifier 530. The object 240 making the motion 1010 may be a hand or a finger, for example. The motion 1020, performed while the object 240 (e.g., finger) is touching the screen 120, is identified as a touchscreen gesture 910 and input to the gesture identifier 530. The identification of the touchscreen gesture 910 is performed through the known touchscreen system of the device 100. As noted above, when the touchscreen gesture 910 is additionally input to the gesture identifier 530, the gesture identifier 530 may treat the motion 1010 corresponding with the touch-less gesture and the motion 1020 corresponding with the touchscreen gesture 910 as a hybrid gesture that corresponds with an action output 560 according to an embodiment of the gesture library 555. Alternately, the gesture identifier 530 may output two independent action outputs 560 corresponding to each of the touch-less gesture and the touchscreen gesture 910.

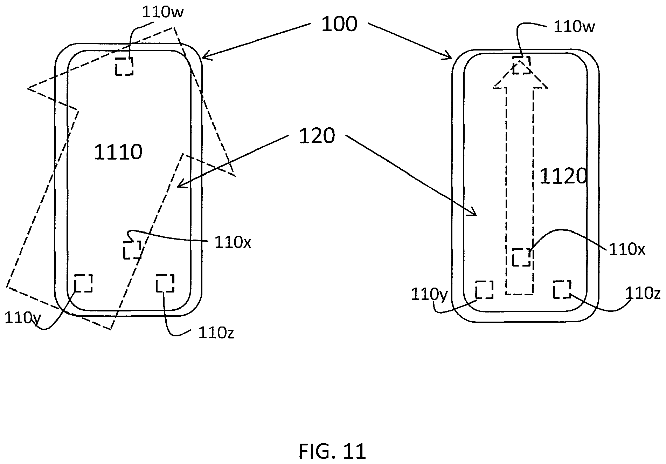

Figure 11 illustrates a touch-less gesture and a touchscreen gesture 910 according to another embodiment. The motion 1110, performed above the device 100, is detected by the ALSs 110 and identified as a touch-less gesture by the gesture identifier 530. The object making the motion 1110 may be a hand, for example. The motion 1120, performed while the object 240 (e.g., finger) is touching the screen 120, is identified as a touchscreen gesture 910. The embodiment shown in Figure 11 illustrates that a touchscreen gesture 910 may also be detected as a touch-less gesture. That is, based on the arrangement of the ALSs 110 in the embodiment shown in Figure 11, the motion 1120 also causes changes in the light intensity 115 output by ALSs 110w and 110x. According to an embodiment, touch-less gesture detection may be overridden when a touchscreen gesture 910 is detected. In alternate embodiments, detected motions that are both touch-less and touchscreen may be processed. As noted with reference to Figure 9, each motion 1110, 1120 may lead to an individual action output 560 being output by the gesture identifier 530 or a hybrid gesture may be detected based on the touch-less gesture and touchscreen gesture 910 and one action output 560 may result from the motions 1110, 1120.

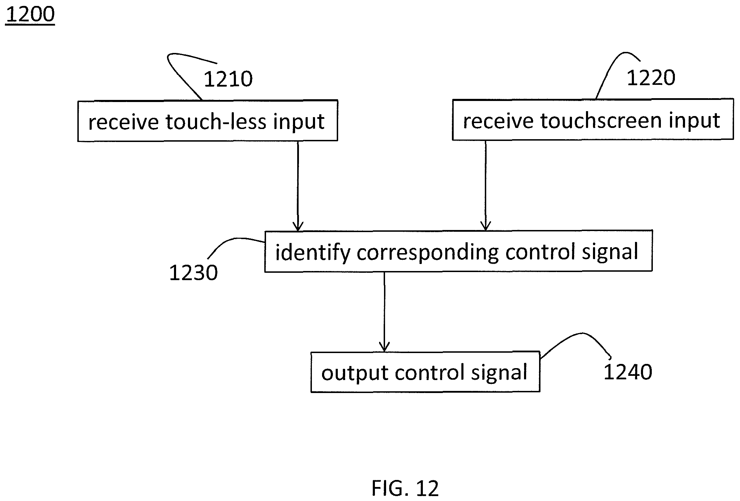

Figure 12 is a process flow of a method 1200 of operating a device 100 using touch-less and touchscreen gestures. At block 1210, receiving touch-less input includes receiving the light measurements 115 from the ALSs 110 indicating a touch-less gesture to the gesture identifier 530. The touch-less input, by itself, may be used by the gesture identifier 530 to generate an action output 560 according to some embodiments. At block 1220, receiving touchscreen input is according to known touchscreen systems that may use one or more of the device 100 processors (e.g., DSP 801). The touchscreen input or touchscreen gesture 910, by itself, may correspond with an action output 560 according to some embodiments of the gesture library 555. Identifying a corresponding control signal (action output 560) at block 1230 includes treating the touch-less gesture and touchscreen gesture 910 as a single hybrid gesture that corresponds with a single action output 560 or treating each gesture as a separate gesture corresponding with a separate action output 560. Outputting the control signal (action output 560) at block 1240 includes outputting the action output 560 based on a touch-less gesture, on a touchscreen gesture 910, or on a combination of the two (hybrid gesture) according to various embodiments.

While several embodiments have been provided in the present disclosure, it should be understood that the disclosed systems and methods may be embodied in many other specific forms without departing from the scope of the present invention as defined by the claims. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present invention as defined by the claims. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the present invention as defined by the claims.

## Claims

1. A device (100) operable using touch-less and touchscreen gestures (910), the device comprising:
three ambient light sensors (110) arranged in a non-collinear pattern at respective surface locations of the device (100) and configured to sense light intensity (115) at the respective surface locations; and
a processor (530) coupled to the three ambient light sensors (110) and configured to identify a touch-less gesture based on the light intensity (115) sensed by the three ambient light sensors (110), receive a touchscreen gesture (910) output by a touchscreen system of the device (100), wherein the touchscreen gesture (910) follows the touch-less gesture, and operate the device (100) based on the touch-less gesture and the touchscreen gesture (910);
**characterised in that** the processor is further configured to initiate identification of the touch-less gesture based on a trigger signal (540) indicating the start of the touch-less gesture, and wherein a background processing system (610) of the device (100) is configured to monitor the light intensity (115) sensed by the three ambient light sensors (110) and output the trigger signal (540) in response to detection of a change in the light intensity (115) sensed by at least one of the three ambient light sensors (110) that is above a defined threshold.

2. The device (100) according to claim 1 wherein the processor (530) outputs one or more control signals (560) based on the touch-less gesture and the touchscreen gesture (910) to operate the device (100).

3. The device (100) according to claim 2, wherein the one or more control signals (560) comprise two control signals (560), each respective control signal (560) corresponding with the touch-less gesture and the touchscreen gesture (910).

4. The device (100) according to claim 1, wherein the processor (530) generates a hybrid gesture as a combination of the touch-less gesture and the touchscreen gesture (910).

5. The device (100) according to claim 4, wherein the processor (530) operates the device based on the hybrid gesture.

6. A method (1200) of operating a device (100) using touch-less and touchscreen gestures (910), the method comprising:
sensing (1210), using three ambient light sensors (110) arranged in a non-collinear pattern at respective surface locations of the device (100), light intensity (115) at the respective surface locations;
identifying (1210), using a processor (530), a touch-less gesture based on the light intensity (115) sensed by the three ambient light sensors (110);
receiving (1220), using the processor (530), a touchscreen gesture (910) output by a touchscreen system of the device (100), wherein the touchscreen gesture (910) follows the touch-less gesture; and
operating (1240) the device (100) based on the touch-less gesture and the touchscreen gesture (910);
**characterised in that** the identifying (1210) the touch-less gesture is initiated based on a trigger signal (540) indicating the start of the touch-less gesture, wherein the trigger signal (540) is output by a background processing system (610) of the device (100) in response to detection of a change in the light intensity (115) sensed by at least one of the three ambient light sensors (110) that is above a defined threshold, and wherein the background processing system (610) is configured to monitor the light intensity (115) sensed by the three ambient light sensors (110).

7. The method (1200) according to claim 6, further comprising the processor outputting (1240) one or more control signals (560) based on the touch-less gesture and the touchscreen gesture (910) to operate the device (100).

8. The method (1200) according to claim 7, wherein the outputting (1240) includes the processor outputting two control signals (560), each respective control signal (560) corresponding with the touch-less gesture and the touchscreen gesture (910).

9. The method (1200) according to claim 6, further comprising the processor generating (1230) a hybrid gesture as a combination of the touch-less gesture and the touchscreen gesture (910).

10. The method (1200) according to claim 9, wherein the operating the device (1240) is based on the hybrid gesture.

11. A system (900) to operate a device (100) using touch-less and touchscreen gestures (910), the system (900) comprising:
three ambient light sensors (110) arranged in a non-collinear pattern at respective surface locations of the device (100) and configured to sense light intensity (115) at the respective surface locations;
a gesture library (555) configured to store two or more gestures in correspondence with respective two or more control signals (560); and
a processor (530) configured to identify a touch-less gesture based on the light intensity (115) sensed by the three ambient light sensors (110), receive a touchscreen gesture (910) output by a touchscreen system of the device (100), wherein the touchscreen gesture (910) follows the touch-less gesture, and output one or more of the control signals (560) to operate the device (100) based on the touch-less gesture and the touchscreen gesture (910);
wherein the processor is further configured to initiate identification of the touch-less gesture based on a trigger signal (540) indicating the start of the touch-less gesture, and wherein a background processing system (610) of the device (100) is configured to monitor the light intensity (115) sensed by the three ambient light sensors (110) and output the trigger signal (540) in response to detection of a change in the light intensity (115) sensed by at least one of the three ambient light sensors (110) that is above a defined threshold.

12. The system (900) according to claim 11, wherein the gesture library (555) includes a respective control signal (560) corresponding with each of the touch-less gesture and the touchscreen gesture (910) and the processor (530) outputs two control signals (560) based on the touch-less gesture and the touchscreen gesture (910).

13. The system (900) according to claim 11, wherein the processor (530) generates a hybrid gesture as a combination of the touch-less gesture and the touchscreen gesture (910).

14. The system (1200) according to claim 13, wherein the gesture library (555) includes the hybrid gesture among the two or more gestures and the processor (530) outputs the respective control signal (560) corresponding with the hybrid gesture in the gesture library (555).

## Patentansprüche

1. Vorrichtung (100), die unter Verwendung von berührungslosen Gesten und Berührungsbildschirmgesten (910) betreibbar ist, wobei die Vorrichtung Folgendes umfasst:
drei Umgebungslichtsensoren (110), die in einem nicht-kollinearen Muster an jeweiligen Oberflächenorten der Vorrichtung (100) angeordnet sind und konfiguriert sind, eine Lichtstärke (115) an den jeweiligen Oberflächenorten zu erfassen; und
einen Prozessor (530), der an die drei Umgebungslichtsensoren (110) gekoppelt ist und konfiguriert ist, eine berührungslose Geste anhand der Lichtstärke (115), die durch die drei Umgebungslichtsensoren (110) erfasst wird, zu identifizieren, eine Berührungsbildschirmgeste (910), die durch ein Berührungsbildschirmsystem der Vorrichtung (100) ausgegeben wird, zu empfangen, wobei die Berührungsbildschirmgeste (910) der berührungslosen Geste folgt, und die Vorrichtung anhand der berührungslosen Geste und der Berührungsbildschirmgeste (910) zu betreiben;
**dadurch gekennzeichnet, dass**
der Prozessor ferner konfiguriert ist, eine Identifikation der berührungslosen Geste anhand eines Auslösesignals (540), das den Start der berührungslosen Geste angibt, einzuleiten, wobei ein Hintergrundverarbeitungssystem (610) der Vorrichtung (100) konfiguriert ist, die Lichtstärke (115), die durch die drei Umgebungslichtsensoren (110) erfasst wird, zu überwachen und das Auslösesignal (540) als Reaktion auf eine Detektion einer Änderung der Lichtstärke (115), die durch mindestens einen der drei Umgebungslichtsensoren (110) detektiert wird und die über einem definierten Schwellenwert liegt, auszugeben.

2. Vorrichtung (100) nach Anspruch 1, wobei der Prozessor (530) ein oder mehrere Steuersignale (560) anhand der berührungslosen Geste und der Berührungsbildschirmgeste (910) ausgibt, um die Vorrichtung (100) zu betreiben.

3. Vorrichtung (100) nach Anspruch 2, wobei das eine oder die mehreren Steuersignale (560) zwei Steuersignale (560) umfassen, wobei jedes entsprechende Steuersignal (560) der berührungslosen Geste und der Berührungsbildschirmgeste (910) entspricht.

4. Vorrichtung (100) nach Anspruch 1, wobei der Prozessor (530) eine Hybridgeste als eine Kombination der berührungslosen Geste und der Berührungsbildschirmgeste (910) erzeugt.

5. Vorrichtung (100) nach Anspruch 4, wobei der Prozessor (530) die Vorrichtung anhand der Hybridgeste betreibt.

6. Verfahren (1200) zum Betreiben einer Vorrichtung (100) unter Verwendung von berührungslosen Gesten und Berührungsbildschirmgesten (910), wobei das Verfahren Folgendes umfasst:
Erfassen (1210) unter Verwendung von drei Umgebungslichtsensoren (110), die in einem nicht-kollinearen Muster an jeweiligen Oberflächenorten der Vorrichtung (100) angeordnet sind, einer Lichtstärke (115) an den jeweiligen Oberflächenorten;
Identifizieren (1210) unter Verwendung eines Prozessors (530) einer berührungslosen Geste anhand der Lichtstärke (115), die durch die drei Umgebungslichtsensoren (110) erfasst wird;
Empfangen (1220) unter Verwendung des Prozessors (530) einer Berührungsbildschirmgeste (910), die durch ein Berührungsbildschirmsystem der Vorrichtung (100) ausgegeben wird, wobei die Berührungsbildschirmgeste (910) der berührungslosen Geste folgt;
Betreiben (1240) der Vorrichtung (100) anhand der berührungslosen Geste und der Berührungsbildschirmgeste (910) ;
**dadurch gekennzeichnet, dass**
das Identifizieren (1210) der berührungslosen Geste anhand eines Auslösesignals (540), das den Start der berührungslosen Geste angibt, eingeleitet wird und wobei das Auslösesignal (540) durch ein Hintergrundverarbeitungssystem (610) der Vorrichtung (100) als Reaktion auf eine Detektion einer Änderung der Lichtstärke (115), die durch mindestens einen der drei Umgebungslichtsensoren (110) detektiert wird und die über einem definierten Schwellenwert liegt, ausgegeben wird, wobei das Hintergrundverarbeitungssystem (610) konfiguriert ist, die Lichtstärke (115), die durch die drei Umgebungslichtsensoren (110) erfasst wird, zu überwachen.

7. Verfahren (1200) nach Anspruch 6, das ferner umfasst, dass der Prozessor ein oder mehrere Steuersignale (560) anhand der berührungslosen Geste und der Berührungsbildschirmgeste (910) ausgibt (1240), um die Vorrichtung (100) zu betreiben.

8. Verfahren (1200) nach Anspruch 7, wobei das Ausgeben (1240) enthält, dass der Prozessor zwei Steuersignale (560) ausgibt, wobei jedes jeweilige Steuersignal (560) der berührungslosen Geste und der Berührungsbildschirmgeste (910) entspricht.

9. Verfahren (1200) nach Anspruch 6, das ferner umfasst, dass der Prozessor eine Hybridgeste als eine Kombination der berührungslosen Geste und der Berührungsbildschirmgeste (910) erzeugt (1230).

10. Verfahren (1200) nach Anspruch 9, wobei das Betreiben der Vorrichtung auf der Hybridgeste beruht.

11. System (900), um eine Vorrichtung (100) unter Verwendung von berührungslosen Gesten und Berührungsbildschirmgesten (910) zu betreiben, wobei das System (900) Folgendes umfasst:
drei Umgebungslichtsensoren (110), die in einem nicht-kollinearen Muster an jeweiligen Oberflächenorten der Vorrichtung (100) angeordnet sind und konfiguriert sind, eine Lichtstärke (115) an den jeweiligen Oberflächenorten zu erfassen; und
eine Gestenbibliothek (555), die konfiguriert ist, zwei oder mehr Gesten in Übereinstimmung mit zwei oder mehreren entsprechenden Steuersignalen (560) zu speichern; und
einen Prozessor (530), der konfiguriert ist, eine berührungslose Geste anhand der Lichtstärke (115), die durch die drei Umgebungslichtsensoren (110) erfasst wird, zu identifizieren, eine Berührungsbildschirmgeste (910), die durch ein Berührungsbildschirmsystem der Vorrichtung (100) ausgegeben wird, zu empfangen, wobei die Berührungsbildschirmgeste (910) der berührungslosen Geste folgt, und ein oder mehrere der Steuersignale (560) auszugeben, um die Vorrichtung (100) anhand der berührungslosen Geste und der Berührungsbildschirmgeste (910) zu betreiben;
wobei der Prozessor ferner konfiguriert ist, eine Identifikation der berührungslosen Geste anhand eines Auslösesignals (540), das den Start der berührungslosen Geste angibt, einzuleiten und wobei ein Hintergrundverarbeitungssystem (610) der Vorrichtung (100) konfiguriert ist, die Lichtstärke (115), die durch die drei Umgebungslichtsensoren (110) erfasst wird, zu überwachen und das Auslösesignal (540) als Reaktion auf eine Detektion einer Änderung der Lichtstärke (115), die durch mindestens einen der drei Umgebungslichtsensoren (110) detektiert wird und die über einem definierten Schwellenwert liegt, auszugeben.

12. System (900) nach Anspruch 11, wobei die Gestenbibliothek (555) ein jeweiliges Steuersignal (560) enthält, das jeder der berührungslosen Geste und der Berührungsbildschirmgeste (910) entspricht, und der Prozessor (530) zwei Steuersignale (560) anhand der berührungslosen Geste und der Berührungsbildschirmgeste (910) ausgibt.

13. System (900) nach Anspruch 11, wobei der Prozessor (530) eine Hybridgeste als eine Kombination der berührungslosen Geste und der Berührungsbildschirmgeste (910) erzeugt.

14. System (1200) nach Anspruch 13, wobei die Gestenbibliothek (555) die Hybridgeste unter den zwei oder mehreren Gesten enthält und der Prozessor (530) das jeweilige Steuersignal (560), das der Hybridgeste in der Gestenbibliothek (555) entspricht, ausgibt.

## Revendications

1. Dispositif (100) actionnable à l'aide de gestes sans contact et d'écran tactile (910), le dispositif comprenant :
trois capteurs de lumière ambiante (110) agencés selon une configuration non colinéaire à des emplacements de surface respectifs du dispositif (100) et configurés pour détecter une intensité lumineuse (115) aux emplacements de surface respectifs ; et
un processeur (530) couplé aux trois capteurs de lumière ambiante (110) et configuré pour identifier un geste sans contact en fonction de l'intensité lumineuse (115) détectée par les trois capteurs de lumière ambiante (110), recevoir un geste d'écran tactile (910) produit en sortie par un système d'écran tactile du dispositif (100), le geste d'écran tactile (910) suivant le geste sans contact, et actionner le dispositif (100) en fonction du geste sans contact et du geste d'écran tactile (910) ;
**caractérisé en ce que**
le processeur est configuré en outre pour lancer l'identification du geste sans contact en fonction d'un signal de déclenchement (540) indiquant le début du geste sans contact, et dans lequel un système de traitement de fond (610) du dispositif (100) est configuré pour surveiller l'intensité lumineuse (115) détectée par les trois capteurs de lumière ambiante (110) et produire en sortie le signal de déclenchement (540) en réponse à la détection d'un changement de l'intensité lumineuse (115) détectée par au moins un des trois capteurs de lumière ambiante (110) supérieur à un seuil défini.

2. Dispositif (100) selon la revendication 1 dans lequel le processeur (530) produit en sortie un ou plusieurs signaux de commande (560) en fonction du geste sans contact et du geste d'écran tactile pour actionner le dispositif (100).

3. Dispositif (100) selon la revendication 2, dans lequel les un ou plusieurs signaux de commande (560) comprennent deux signaux de commande (560), chaque signal de commande respectif (560) correspondant au geste sans contact et au geste d'écran tactile (910).

4. Dispositif (100) selon la revendication 1, dans lequel le processeur (530) génère un geste hybride en tant que combinaison du geste sans contact et du geste d'écran tactile.

5. Dispositif (100) selon la revendication 4, dans lequel le processeur (530) actionne le dispositif en fonction du geste hybride.

6. Procédé (1200) d'actionnement d'un dispositif (100) à l'aide de gestes sans contact et d'écran tactile (910), le procédé comprenant :
la détection (1210), à l'aide de trois capteurs de lumière ambiante (110) agencés selon une configuration non colinéaire à des emplacements de surface respectifs du dispositif (100), d'une intensité lumineuse (115) aux emplacements de surface respectifs ;
l'identification (1210), au moyen d'un processeur (530), d'un geste sans contact en fonction de l'intensité lumineuse (115) détectée par les trois capteurs de lumière ambiante (110) ;
la réception (1220), à l'aide du processeur (530), d'un geste d'écran tactile (910) produit en sortie par un système d'écran tactile du dispositif (100), le geste d'écran tactile (910) suivant le geste sans contact ; et
l'actionnement (1240) du dispositif (100) en fonction du geste sans contact et du geste d'écran tactile (910) ;
**caractérisé en ce que**
l'identification (1210) du geste sans contact est lancée en fonction d'un signal de déclenchement (540) indiquant le début du geste sans contact, dans lequel le signal de déclenchement (540) est produit en sortie par un système de traitement de fond (610) du dispositif (100) en réponse à la détection d'un changement de l'intensité lumineuse (115) détectée par au moins un des trois capteurs de lumière ambiante (110) supérieur à un seuil défini, et dans lequel le système de traitement de fond (610) est configuré pour surveiller l'intensité lumineuse (115) détectée par les trois capteurs de lumière confiante (110).

7. Procédé (1200) selon la revendication 6, comprenant en outre la production en sortie (1240) par le processeur d'un ou de plusieurs signaux de commande (560) en fonction du geste sans contact et du geste d'écran tactile (910) pour actionner le dispositif (100).

8. Procédé (1200) selon la revendication 7, dans lequel la production en sortie (1240) comporte la production en sortie par le processeur de deux signaux de commande (560), chaque signal de commande respectif (560) correspondant au geste sans contact et au geste d'écran tactile (910).

9. Procédé (1200) selon la revendication 6, comprenant en outre la génération (1230) par le processeur d'un geste hybride en tant que combinaison du geste sans contact et du geste d'écran tactile (910).

10. Procédé (1200) selon la revendication 9, dans lequel l'actionnement du dispositif (1240) est fonction du geste hybride.

11. Système (900) d'actionnement d'un dispositif (100) à l'aide de gestes sans contact et d'écran tactile (910), le système (900) comprenant :
trois capteurs de lumière ambiante (110) agencés selon une configuration non colinéaire à des emplacements de surface respectifs du dispositif (100) et configurés pour détecter une intensité lumineuse (115) aux emplacements de surface respectifs ;
une bibliothèque de gestes (555) configurée pour mémoriser deux ou plusieurs gestes en correspondance avec deux ou plusieurs signaux de commande respectifs (560) ; et
un processeur (530) configuré pour identifier un geste sans contact en fonction de l'intensité lumineuse (115) détectée par les trois capteurs de lumière ambiante (110), recevoir un geste d'écran tactile (910) produit en sortie par un système d'écran tactile du dispositif (100), le geste d'écran tactile (910) suivant le geste sans contact, et produire en sortie un ou plusieurs des signaux de commande (560) pour actionner le dispositif (100) en fonction du geste sans contact et du geste d'écran tactile (910) ;
dans lequel le processeur est configuré en outre pour lancer l'identification du geste sans contact en fonction d'un signal de déclenchement (540) indiquant le début du geste sans contact, et dans lequel un système de traitement de fond (610) du dispositif (100) est configuré pour surveiller l'intensité lumineuse (115) détectée par les trois capteurs de lumière ambiante (110) et produire en sortie le signal de déclenchement (540) en réponse à la détection d'un changement de l'intensité lumineuse (115) détectée par au moins un des trois capteurs de lumière ambiante (110) supérieur à un seuil défini.

12. Système (900) selon la revendication 11, dans lequel la bibliothèque de gestes (555) comporte un signal de commande respectif (560) correspondant à chacun du geste sans contact et du geste d'écran tactile (910) et le processeur (530) produit en sortie deux signaux de commande (560) en fonction du geste sans contact et du geste d'écran tactile (910).

13. Système (900) selon la revendication 11, dans lequel le processeur (530) génère un geste hybride en tant que combinaison du geste sans contact et du geste d'écran tactile (910).

14. Système (1200) selon la revendication 13, dans lequel la bibliothèque de gestes (555) comporte le geste hybride parmi les deux ou plusieurs gestes et le processeur (530) produit en sortie le signal de commande respectif (560) correspondant au geste hybride dans la bibliothèque de gestes (555).
